Europäisches Patentamt

European Patent Office

Office européen des brevets

(11) Veröffentlichungsnummer: **0 139 194**
**B1**

(12) **EUROPÄISCHE PATENTSCHRIFT**

(45) Veröffentlichungstag der Patentschrift:
09.03.88

(51) Int. Cl.⁴: **C 01 B 15/017,** C 07 C 39/08,
C 07 C 37/60

(21) Anmeldenummer: **84110595.0**

(22) Anmeldetag: **06.09.84**

(54) Verfahren zur Kernhydroxylierung von Phenol oder Phenolderivaten.

(30) Priorität: **27.09.83 DE 3334854**

(43) Veröffentlichungstag der Anmeldung:
02.05.85 Patentblatt 85/18

(45) Bekanntmachung des Hinweises auf die Patenterteilung:
09.03.88 Patentblatt 88/10

(84) Benannte Vertragsstaaten:
AT BE CH DE FR GB IT LI LU NL SE

(56) Entgegenhaltungen:
EP - A - 0 121 672
EP - A - 0 121 693
EP - A - 0 122 374
DE - A - 3 225 307
DE - B - 2 038 319
DE - B - 2 125 159
DE - B - 2 410 742
DE - B - 2 462 957
DE - B - 2 462 990
DE - C - 2 038 320

(73) Patentinhaber: **Degussa Aktiengesellschaft,
Weissfrauenstrasse 9, D-6000 Frankfurt am Main 1 (DE)**

(72) Erfinder: **Drauz, Karlheinz, Dr. Dipl.-Chem.,
Flurstrasse 5, D-6463 Freigericht 1 (DE)**
Erfinder: **Kleemann, Axel, Dr. Dipl.-Chem., Bornweg 36,
D-6052 Mühlheim 2 (DE)**

## Beschreibung

Die Erfindung betrifft ein Verfahren zur Kernhydroxylierung von Phenol oder Phenolderivaten unter Verwendung der zu hydroxylierenden Verbindung als Lösungsmittel für Wasserstoffperoxid.

Nichtwässrige Lösungen von Wasserstoffperoxid in den verschiedensten organischen Lösungsmitteln werden bekanntlich bei vielen Reaktionen, z.B. Oxydationen, Epoxydationen oder bei Kernhydroxylierungen von Phenolen eingesetzt. Da die Anwesenheit von Wasser die genannten Reaktionen störend beeinflusst, wurde schon versucht, möglichst wasserarme organische Lösungen von Wasserstoffperoxid zu gewinnen, s. Org. Reactions 7, 395 (1953); DE-C 2 038 319; 2 038 320; DE-B 2 410 742; 2 462 957, 2 462 990.

Bei der Herstellung derartiger Lösungen zeigten sich aber Schwierigkeiten, da der Wassergehalt der Lösungen zu hoch war und ausserdem nicht unerhebliche Verluste an Wasserstoffperoxid durch Herausschleppen während des Abdestillierens von Wasser und durch Zersetzung im Sumpf auftraten, siehe DE-C 2 038 319; 2 038 320.

Aus den DE-B'en 2 462 957 bzw. 2 462 990 ist ein Verfahren zur Kernhydroxylierung von Phenol bzw. Phenolderivaten mit Wasserstoffperoxid in Gegenwart einer starken Säure bekannt, wobei Wasserstoffperoxid in Form einer zuvor hergestellten praktisch wasserfreien Lösung in dem zur Umsetzung bestimmten Phenol eingesetzt wird.

So ist es nach DE-B 2 462 957 bekannt, eine Lösung von Wasserstoffperoxid in Phenol in der Form herzustellen, dass man eine wasserarme Lösung von Wasserstoffperoxid in einem hochsiedenden Lösungsmittel, wie Phosphorsäureester, z.B. in Triisooctylphosphat, in eine Kolonne zu überdestillierendem Phenol hinzugibt und im Vakuum Phenol gemeinsam mit Wasserstoffperoxid über Kopf bei Kopftemperaturen von etwa 75°C abdestilliert. Hierbei soll das gesamte Wasserstoffperoxid in dem Phenol übergehen. Ein für Phenolderivate entsprechendes Verfahren wird in der DE-B 2 462 990 beschrieben.

Es handelt sich also einmal um ein zweistufiges Herstellungsverfahren der gewünschten Lösung, nämlich um die Herstellung der Wasserstoffperoxidlösung in einem Phosphorsäureester und dann um die Überführung dieser Lösung in eine Lösung von Wasserstoffperoxid in Phenol. Es kommt hinzu, dass in der zweiten Stufe das Wasserstoffperoxid vollständig abdestilliert werden muss und sich daher über längere Zeit bei erhöhten Temperaturen befindet. Hierdurch tritt nicht nur die Gefahr der Zersetzung und damit eines Verlustes von Wasserstoffperoxid auf, sondern es entstehen bei dieser Totalverdampfung zusätzlich sensible Gasgemische, die Wasserstoffperoxid in Dampfform enthalten.

Die EP-A 0 122 374 (veröffentlicht am 24.10.84 und zum Stand der Technik gehörend nach Artikel 54(3) EPÜ) richtet sich auf ein Verfahren zur Kernhydroxylierung von substituierten Phenolen oder Phenoläthern mit einer praktisch wasserfreien Lösung von Wasserstoffperoxid in einem organischen Lösungsmittel in Gegenwart von Schwefeldioxid als Katalysator. Auch dieses Verfahren erfordert zunächst die Herstellung einer praktisch wasserfreien Lösung von Wasserstoffperoxid in einem organischen Lösungsmittel, wobei Alkyl- oder Cycloalkylester von gesättigten aliphatischen Carbonsäuren bevorzugt eingesetzt werden, und schliesslich die Abtrennung dieses Lösungsmittels bei der Aufarbeitung des Reaktionsgemisches. Weder die Verwendung der zu hydroxylierenden Verbindung als Lösungsmittel für Wasserstoffperoxid noch ein Verfahren zur Herstellung einer solchen praktisch wasserfreien Lösung lassen sich der EP-A 0 122 374 entnehmen oder werden durch dieses Dokument nahegelegt.

Aufgabe der Erfindung ist somit ein vereinfachtes Verfahren zur Kernhydroxylierung von Phenol oder Phenolderivaten mit einer praktisch wasserfreien Lösung von Wasserstoffperoxid in organischem Lösungsmittel in Gegenwart eines Katalysators, das es gestattet, die zu hydroxylierende Verbindung selbst als Lösungsmittel für Wasserstoffperoxid zu verwenden und die erforderlichen Lösungen von Wasserstoffperoxid in Phenol oder Phenolderivaten in einer einzigen Verfahrensstufe und ohne Zersetzung von Wasserstoffperoxid und ohne Gefahr oder Bildung explosibler Dampfgemische praktisch wasserfrei herzustellen. Unter «Phenolderivaten» werden Alkylabkömmlinge, wie Kresole, Äthyl- oder Butylphenole, Arylphenole, wie 4-Hydroxybiphenyl, Alkoxyphenole, wie Anisol und dessen Aryl- oder Halogenabkömmlinge, Phenyläther, Phenylisopropyläther oder p-Kresolmethyläther verstanden.

Erfindungsgemäss wird die Aufgabe gelöst durch ein Verfahren zur Kernhydroxylierung von Phenol oder Phenolderivaten mit einer durch Entfernung des Wassers als Azeotrop erhaltenen praktisch wasserfreien Lösung von Wasserstoffperoxid in organischem Lösungsmittel in Gegenwart eines Katalysators der Formel $XO_2$, bei Temperaturen von 20 bis 200°C und einem Molverhältnis von Phenol oder Phenolderivat zu Wasserstoffperoxid von 5 bis 20:1, das dadurch gekennzeichnet ist, dass man

(a) die zu hydroxylierende Verbindung selbst als Lösungsmittel für Wasserstoffperoxid verwendet, wobei

(b) die praktisch wasserfreie Lösung von Wasserstoffperoxid hergestellt worden ist durch Vermischen von Phenol oder dem Phenolderivat und wässrigem Wasserstoffperoxid mit einem Lösungsmittel oder Lösungsmittelgemisch, dessen Siedepunkt unter dem von Wasserstoffperoxid und Phenol oder dem Phenolderivat, bezogen auf Normaldruck, liegt, das ferner mit diesen beiden Komponenten ausreichend homogene Lösungen gibt und nur mit Wasser ein oder mehrere Azeotrope bildet, deren Siedepunkte unter denen von Wasserstoffperoxid, Phenol oder dem Phenolderivat liegen, das ausserdem gegenüber Wasserstoffperoxid und Phenol oder dem Phenolderivat inert ist und sich leicht von der gebildeten Lösung von Wasserstoffperoxid in Phenol oder dem Phenolderivat abtrennen lässt, und anschliessendes Abdestillieren des Wassers als Azeotrop mit dem Lösungsmittel bei Normaldruck, Vakuum oder Überdruck und Entfernen des restlichen Lösungsmittels, wobei die praktisch wasserfreie Lösung von Wasserstoffperoxid in Phenol oder dem Phenolderivat im Sumpf verbleibt

(c) und die Kernhydroxylierung in Gegenwart eines Katalysators der Formel $XO_2$, in der X Schwefel, Selen oder Tellur bedeutet, durchführt.

Günstig ist es, Phenol oder das Phenolderivat vorzulegen und dann das Lösungsmittel und das wässrige Wasserstoffperoxid einzuführen.

Die Lösungsmittel sind so zu wählen, dass sich so, viel an wässrigem Wasserstoffperoxid löst, dass das vorhandene Wasser abgeschleppt werden kann. Das wird unter dem Ausdruck «ausreichend homogen» verstanden. Es lässt sich durch einen Vorversuch feststellen.

In den meisten Fällen wird die Destillation selbst zunächst bei Atmosphärendruck zur Entfernung des Wassers als Azeotrop und zur Entfernung der Hauptmenge des Lösungsmittels durchgeführt, das restliche Lösungsmittel lässt sich bei geringem, an sich nicht kritischem Unterdruck entfernen, wie z.B. bei Phenol bis 100 mbar.

Sollten die Siedepunkte des Azeotrops und des Wasserstoffperoxids ziemlich nahe beieinander liegen, so kann die Destillation zunächst auch bei leichtem Überdruck vorgenommen werden, z.B. bis 3 bar. Bevorzugte Lösungsmittel sind halogenierte, aliphatische, niedrig siedende Kohlenwasserstoffe, wie Dichlormethan, Trichlormethan, Fluortrichlormethan, Dichlordifluormethan, bevorzugt Dichlormethan. Ferner kommen in Frage niedrigsiedende Äther, wie Diäthyläther, Methylisopropyläther und Methyl-tert.butyläther.

Wasserstoffperoxid wird in wässrigen Lösungen von 3 bis 90 Gew.-% Wasserstoffperoxid, bevorzugt von 30–85 Gew.-%, eingesetzt. Schwächere Lösungen als 3 gew.-%ige sind technisch uninteressant wegen der sehr grossen, als Azeotrop zu entfernenden Wassermenge. Höher konzentrierte Lösungen als 90 gew.-%ige können Anlass zur Bildung sensibler Gemische geben.

Die Lösungen von Wasserstoffperoxid in Phenol oder Phenolderivaten sind praktisch wasserfrei. Ihr Wassergehalt liegt in jedem Fall unter 1 Gew.-%, bevorzugt unter 0,5 Gew.-%, bis herab zu 0,01 Gew.-%. Besonders günstig erwiesen sich diese Lösungen bei der Kernhydroxylierung von Phenol und seinen Derivaten, die sich erfindungsgemäss sehr einfach in Gegenwart eines Katalysators der Formel $XO_2$, in der X Schwefel, Selen oder Tellur bedeutet, durchführen lässt.

Bei dieser Form der Kernhydroxylierung wird also die zu hydroxylierende Verbindung selbst als Lösungsmittel für Wasserstoffperoxid verwendet. Die Kernhydroxylierungsreaktion findet bei Temperaturen von 20 bis 200 °C statt. Die bevorzugten Temperaturen liegen bei Verwendung von Schwefeldioxid als Katalysator bei 120 bis 180°C, bei Selendioxid zwischen 100 und 170°C.

Der anzuwendende Druckbereich ist nicht kritisch; im allgemeinen wird man bei Normaldruck arbeiten, obwohl Unter- oder Überdruck möglich sind, z.B. Überdrucke bis zu 2 bar.

Schwefeldioxid kann sowohl gasförmig als auch in gelöster Form eingesetzt werden. Als Lösungsmittel kommen neben dem Lösungsmittel der Wasserstoffperoxidlösung, d.h. Phenol oder Phenolderivat, auch Alkyl- oder Cycloalkylester von gesättigten, aliphatischen Carbonsäuren, die eine Gesamtkohlenstoffzahl von 4–8 besitzen, in Frage, vor allem Essigsäure-n- und -i-propylester, Essigsäureäthylester. Auch Methylenchlorid kann hier als Lösungsmittel eingesetzt werden. Aber auch Dialkyläther oder Ester der Phosphor- oder Phosphonsäure lassen sich verwenden.

Die Konzentration dieser Schwefeldioxidlösungen liegt im allgemeinen bei 0,5 bis 50 Gew.-%, bevorzugt bei 1 bis 10 Gew.-%. Besonders günstig sind frisch hergestellte Lösungen von Schwefeldioxid, die also frei von Wasser und Nebenprodukten, wie z.B. Alkylsulfonaten, sind.

Der Katalysator Schwefeldioxid wird in sehr geringen Mengen, d.h. in Mengen von 0,0001 bis 0,1 Mol, bevorzugt von 0,0005 bis 0,01 Mol, bezogen auf 1 Mol Wasserstoffperoxid, eingesetzt. Dies ist – verglichen mit den bisher verwendeten Mengen an starken Mineralsäuren – äusserst wenig. Durch die Verwendung von Selendioxid als Katalysator lässt sich das Verhältnis von Brenzcatechin zu Hydrochinon bzw. das von zwei möglichen Orthosubstitutionsprodukten beeinflussen. So lässt sich das Verhältnis von Brenzcatechin zu Hydrochinon zwischen 5:1 bis 1:1 variieren, obwohl das theoretische Verhältnis bei 2:1 liegt. Ist bei substituierten Phenolen die Paraposition zur OH-Gruppe durch einen Substituenten, z.B. eine Methylgruppe, besetzt, so kann die zweite Hydroxylgruppe sowohl orthoständig zur ersten OH-Gruppe als auch zur $CH_3$-Gruppe eintreten. Die resultierenden Produkte sind dann in 4-Stellung substituierte Brenzcatechine bzw. Resorcine.

Es ist nun möglich, die Verhältnisse der beiden Ortho-Hydroxylierungsprodukte auf etwa 5:1 bis 80:1 einzustellen, bezogen auf die Orthostellung zur ersten Hydroxylgruppe.

Selendioxid wird in fester Form, bevorzugt als Pulver, in Mengen von 0,0001 bis 5 Mol, bevorzugt von 0,0005 bis 0,2 Mol, bezogen auf 1 Mol Wasserstoffperoxid, eingesetzt. Es kann auch in gelöster Form, z.B. als Lösung in Phenol oder dem Phenolderivat, verwendet werden. Die Konzentration einer solchen Lösung liegt bei 0,1 bis 10 Gew.-%. Die einzusetzenden Lösungen von Wasserstoffperoxid in Phenol oder Phenolderivaten lassen sich bei der Herstellung schon so variieren, dass das Molverhältnis von Phenol oder Phenolderivat zu Wasserstoffperoxid bei 5 bis 20:1, bevorzugt bei 5 bis 15:1, liegt. Die Reaktionszeiten sind sowohl bei Verwendung von Schwefeldioxid als auch von Selendioxid kurz. Sie überschreiten bei einem Umsatz von 99% praktisch nicht die Dauer von 30 Minuten. Wird Schwefeldioxid als Katalysator eingesetzt, so ist die Reaktion sogar praktisch schon nach 10 Minuten beendet.

Die Kernhydroxylierung von Phenol oder Phenolderivaten, die mit den Katalysatoren Schwefeldioxid oder Selendioxid vorgenommen wird, lässt sich durch die Verwendung der Lösungen von Wasserstoffperoxid in den umzusetzenden Verbindungen sehr vereinfachen.

**Beispiel 1:**

Darstellung einer wasserfreien Lösung von $H_2O_2$ in Phenol nach der in situ-Methode

Zu 387,0 g Phenol werden nacheinander 700,0 g Dichlormethan und 30,0 g einer 70,0 gew.-%igen wässrigen Wasserstoffperoxidlösung zugegeben ($\triangleq$ = 21,0 g $H_2O_2$).

Man destilliert bei Normaldruck und einer Kopftemperatur von 38–41°C über einen Wasserabscheider 9,1 g Wasser ab, die Sumpftemperatur erreicht einen Maximalwert von 71°C. Anschliessend werden zuerst bei Normaldruck, dann bei 500 mbar 698,1 g Dichlormethan abdestilliert. Der Gehalt des Dichlormethans an $H_2O_2$ beträgt 0,04 Gew.-%. Im Sumpf verbleiben 406,2 g einer 5,02 gew.-%igen Lösung von $H_2O_2$ in Phenol mit einem Wassergehalt unter 0,5 Gew.-%.

**Beispiel 2:**

Eine wasserfreie Lösung von 3,40 g $H_2O_2$ (0,1 Mol) in 94,1 g Phenol (1,0 Mol) wird auf 90°C erwärmt. Zu der gerührten Lösung setzt man 0,095 ml einer 24 gew.-%igen Lösung von $SO_2$ in Essigsäure-iso-propylester zu. Die Temperatur in der Reaktionsmischung steigt danach auf 143°C. Nach Abklingen der Exotherme wird nach 5 Minuten ein Wasserstoffperoxid-Umsatz von 95,7% festgestellt. Das Reaktionsgemisch enthält dann 5,78 g (52,5 mMol) Brenzcatechin und 2,37 g (21,5 mMol) Hydrochinon, was einer Gesamtausbeute an Dihydroxybenzolen von 77,3%, bezogen auf umgesetztes Wasserstoffperoxid, entspricht.

**Beispiel 3:**

Eine wasserfreie Lösung von 6,80 g $H_2O_2$ (0,2 Mol) in 97,0 g Phenol (1,03 Mol) wird auf 100°C erwärmt. Zu der gerührten Lösung werden 0,17 g einer 24 gew.-%igen Lösung von $SO_2$ in Essigsäure-iso-propylester zugegeben. Die Temperatur in der Reaktionslösung steigt anschliessend auf 170°C. Nach Abklingen der Exotherme wird nach 5 Minuten ein Wasserstoffperoxid-Umsatz von 99,2% festgestellt. Im Reaktionsgemisch sind 9,67 g (42,6 mMol) Brenzcatechin und 5,24 g (23,1 mMol) Hydrochinon enthalten, was einer Gesamtausbeute an Dihydroxybenzolen von 65,7%, bezogen auf umgesetztes Wasserstoffperoxid, entspricht.

**Beispiel 4:**

Herstellung einer wasserfreien Lösung von Wasserstoffperoxid in p-Kresol nach der in situ-Methode

Zu 400,0 g frisch destilliertem p-Kresol werden nacheinander 500 ml Dichlormethan und 30,0 g einer 70,0 gew.-%igen wässrigen Lösung von $H_2O_2$ ($\triangleq$ 21,0 g $H_2O_2$) gegeben. Man destilliert bei einer Kopftemperatur von 38–41,5°C 9,06 g Wasser über einen Wasserabscheider ab, die Sumpftemperatur erreicht einen Maximalwert von 75°C. Anschliessend werden zuerst bei Normaldruck, dann bei 430 mbar 696 g Dichlormethan abdestilliert. Der Gehalt des Dichlormethans an $H_2O_2$ beträgt 0,05 Gew.-%. Im Sumpf verbleiben 419,9 g einer 4,91 gew.-%igen Lösung von $H_2O_2$ in p-Kresol mit einem Beispiel 1 entsprechenden geringen Wassergehalt.

**Beispiel 5:**

Herstellung einer wasserfreien Lösung von Wasserstoffperoxid in 4-tert.Butylphenol

Zu 300,0 g frisch destilliertem 4-tert.Butylphenol werden nacheinander 450 ml Dichlormethan und 25,0 g einer 70,02 gew.-%igen wässrigen Lösung von $H_2O_2$ ($\triangleq$ 17,51 g $H_2O_2$) gegeben. Man destilliert bei einer Kopftemperatur von 38–41°C 7,5 g Wasser über einen Wasserabscheider ab, die Sumpftemperatur erreicht einen Maximalwert von 79°C. Anschliessend wird zuerst bei Normaldruck, dann bei 350 mbar 418 g Dichlormethan abdestilliert. Der Gehalt des Dichlormethans an $H_2O_2$ beträgt 0,06 Gew.-%. Im Sumpf verbleiben 317,0 g einer 5,36 gew.-%igen Lösung von $H_2O_2$ in 4-tert.Butylphenol mit einem Beispiel 1 entsprechenden sehr geringen Wassergehalt.

**Beispiel 6:**

Eine wasserfreie Lösung von 3,40 g $H_2O_2$ (0,1 Mol) in 150,2 g (1,0 Mol) 4-tert.Butylphenol wird auf 90°C erwärmt und mit 0,4 g einer 4,8 gew.-%igen Lösung von Schwefeldioxid in Essigsäure-iso-propylester versetzt. Die Temperatur der Reaktionslösung steigt danach bis auf 159°C. Nach Abklingen der Exotherme wird nach 10 Minuten ein Wasserstoffperoxid-Umsatz von 98,9% bestimmt. Im Reaktionsgemisch sind dann 12,95 g 4-tert.Butylbrenzcatechin enthalten, was einer Ausbeute von 78,8%, bezogen auf das umgesetzte Wasserstoffperoxid, entspricht.

**Beispiel 7:**

Eine wasserfreie Lösung von 3,40 g $H_2O_2$ (0,1 Mol) in 108,1 g (1,0 Mol) p-Kresol werden auf 95°C erwärmt und mit 0,018 g (0,00015 Mol) $SeO_2$ versetzt. Die Temperatur steigt danach auf 161°C an. Nach 15 Minuten wird ein Wasserstoffperoxid-Umsatz von 99,4% bestimmt. Im Reaktionsgemisch sind dann 8,08 g 4-Methylbrenzcatechin entstanden, was einer Ausbeute von 65,5 Mol%, bezogen auf umgesetztes $H_2O_2$, entspricht. 4-Methylresorcin sind in einer Menge von 0,85 Mol% entstanden.

**Beispiel 8:**

Eine wasserfreie Lösung von 3,40 g $H_2O_2$ (0,1 Mol) in 94,1 g (1,0 Mol) Phenol werden auf 90°C erwärmt und mit 0,022 g (0,0002 Mol) $SeO_2$ versetzt. Die Temperatur in der Reaktionslösung steigt anschliessend auf 163°C. Nach 10 Minuten wird ein Wasserstoffperoxid-Umsatz von 98% festgestellt. Das Reaktionsgemisch enthält dann 5,81 g (52,8 Mol%) Brenzcatechin und 1,31 g (11,9 Mol%) Hydrochinon, was einer Gesamtausbeute an Dihydroxybenzolen von 66,0%, bezogen auf umgesetztes $H_2O_2$, entspricht. Das Verhältnis Brenzcatechin zu Hydrochinon liegt bei 4,43.

## Patentansprüche

1. Verfahren zur Kernhydroxylierung von Phenol oder Phenolderivaten mit einer durch Entfernung des Wassers als Azeotrop erhaltenen praktisch wasserfreien Lösung von Wasserstoffperoxid in organischem Lösungsmittel in Gegenwart eines Katalysators der Formel $XO_2$, bei Temperaturen von 20 bis 200°C und einem Molverhältnis von Phenol oder Phenolderivat zu Wasserstoffperoxid von 5 bis 20:1, dadurch gekennzeichnet, dass man

(a) die zu hydroxylierende Verbindung selbst als Lösungsmittel für Wasserstoffperoxid verwendet, wobei

(b) die praktisch wasserfreie Lösung von Wasserstoffperoxid hergestellt worden ist durch Vermischen von Phenol oder dem Phenolderivat und wässrigem Wasserstoffperoxid mit einem Lösungsmittel oder Lösungsmittelgemisch, dessen Siedepunkt unter dem von Wasserstoffperoxid und Phenol oder dem Phenolderivat, bezogen auf Normaldruck, liegt, das ferner mit diesen beiden Komponenten ausreichend homogene Lösungen gibt und nur mit Wasser ein oder mehrere Azeotrope bildet, deren Siedepunkte unter denen von Wasserstoffperoxid, Phenol oder dem Phenolderivat liegen, das ausserdem gegenüber Wasserstoffperoxid und Phenol oder dem Phenolderivat inert ist und sich leicht von der gebildeten Lösung von Wasserstoffperoxid in Phenol oder dem Phenolderivat abtrennen lässt, und anschliessendes Abdestillieren des Wassers als Azeotrop mit dem Lösungsmittel bei Normaldruck, Vakuum oder Überdruck und Entfernen des restlichen Lösungsmittels, wobei die praktisch wasserfreie Lösung von Wasserstoffperoxid in Phenol oder dem Phenolderivat im Sumpf verbleibt

(c) und die Kernhydroxylierung in Gegenwart eines Katalysators der Formel $XO_2$, in der X Schwefel, Selen oder Tellur bedeutet, durchführt.

2. Verfahren nach Anspruch 1, dadurch gekennzeichnet, dass man als Lösungsmittel halogenierte, aliphatische, niedrigsiedende Lösungsmittel, wie Dichlormethan, Trichlormethan, Fluortrichlormethan, Dichlordifluormethan, einsetzt.

## Claims

1. A process for the nuclear hydroxylation of phenol or phenol derivatives with a substantially anhydrous solution of hydrogen peroxide in an organic solvent, obtained by removing the water as azeotrope, in the presence of a catalyst according to the formula $XO_2$, at temperatures of from 20 to 200°C and a molar ratio of phenol or phenol derivative to hydrogen peroxide of from 5 to 20:1, characterised in that

a) the compound to be hydroxylated is itself used as solvent for hydrogen peroxide, wherein

b) the substantially anhydrous solution of hydrogen peroxide has been produced by mixing phenol or the phenol derivative and aqueous hydrogen peroxide with a solvent or solvent mixture whose boiling point lies below that of hydrogen peroxide and phenol or the phenol derivative, based on normal pressure, and which also gives sufficiently homogeneous solutions with these two components and, only with water, forms one or more azeotropes whose boiling points lie below those of hydrogen peroxide, phenol or the phenol derivative, which is also inert to hydrogen peroxide and phenol or the phenol derivative and can easily be separated from the resultant solution of hydrogen peroxide in phenol or the phenol derivative, and by subsequently distilling off the water as azeotrope with the solvent at normal pressure, under vacuum or at excess pressure and by removing the remaining solvent, the substantially anhydrous solution of hydrogen peroxide in phenol or the phenol derivative remaining in the sump,

c) and nuclear hydroxylation is carried out in the presence of a catalyst corresponding to the formula $XO_2$ in which X represents sulphur, selenium or tellurium.

2. A process according to claim 1, characterised in that halogenated aliphatic solvents having a low boiling point, such as dichloromethane, trichloromethane, fluorotrichloromethane and dichlorodifluoromethane are used as solvents.

## Revendications

1. Procédé pour l'hydroxylation sur le noyau de phénol ou dérivés du phénol, avec une solution pratiquement anhydre de peroxyde d'hydrogène, obtenue en chassant l'eau sous la forme d'azéotrope, dans un solvant organique, en présence d'un catalyseur de formule $XO_2$, à des températures de 20 à 200°C, avec un rapport moléculaire entre le phénol ou les dérivés du phénol et l'$H_2O_2$ de 5 à 20:1 caractérisé en ce que:

(a) l'on utilise le composé qui doit être hydroxylé, comme solvant du peroxyde d'hydrogène, de sorte que,

(b) la solution pratiquement anhydre d'$H_2O_2$ est fabriquée par mélange du phénol ou des dérivés du phénol et du peroxyde d'hydrogène aqueux avec un solvant ou un mélange de solvants, dont le point d'ébullition est inférieur à celui du peroxyde d'hydrogène et du phénol et du dérivé du phénol, calculé à la pression normale, qu'en outre on obtient avec ces deux composants des solutions suffisamment homogènes, et qu'il se forme avec de l'eau, un ou plusieurs azéotropes, seulement dont les points d'ébullition sont inférieurs à ceux de $H_2O_2$, du phénol et des dérivés du phénol, qu'en outre, l'azéotrope est in-

erte par rapport à $H_2O_2$, au phénol, et aux dérivés du phénol, et se laisse facilement séparer de la solution formée par $H_2O_2$ dans le phénol ou les dérivés du phénol, et qu'ensuite on élimine l'eau par distillation sous forme d'azéotrope avec le solvant, à la pression normale, sous vide ou sous surpression, on élimine le reste du solvant, la solution pratiquement exempte d'eau du peroxyde d'hydrogène et du phénol ou du dérivé du phénol restant dans le fond,

(c) et on effectue l'hydroxylation sur le noyau en présence d'un catalyseur de formule $XO_2$, ou X représente le soufre, le sélénium ou le tellure.

2) Procédé selon la revendication 1, caractérisé en ce que l'on utilise, comme solvant, des solvants aliphatiques halogénés, à faible point d'ébullition, tels que les dichlorométhane, trichlorométhane, fluorotrichlorométhane, dichlordifluorométhane.